# EUROPÄISCHE PATENTSCHRIFT

(11) **EP 2 992 226 B1**
(45) Veröffentlichungstag und Bekanntmachung des Hinweises auf die Patenterteilung: **27.06.2018**
(21) Anmeldenummer: 14715952.9
(22) Anmeldetag: 09.04.2014
(51) Int. Cl.: F16B 13/00, E04B 1/41, F16F 15/02

(54) **VERANKERUNGSSYSTEM**
ANCHOR SYSTEM
SYSTÈME D'ANCRAGE

(30) Priorität: 02.05.2013 DE 102013104482; 30.08.2013 DE 102013109428
(43) Veröffentlichungstag der Anmeldung: 09.03.2016
(73) Patentinhaber: Ludwig Hettich Holding GmbH & Co. KG, 78713 Schramberg-Sulgen (DE)
(72) Erfinder: HETTICH, Stefan, 78713 Schramberg (DE)
(74) Vertreter: Lucke, Andreas
(86) Internationale Anmeldenummer: PCT/EP2014/057152
(87) Internationale Veröffentlichungsnummer: WO 2014/177350

(56) Entgegenhaltungen:
- DE-B- 1 087 408
- DE-U1- 8 713 708
- JP-A- H08 177 823
- US-A- 4 653 132

## Beschreibung

Die Erfindung betrifft ein Verankerungssystem aus einem Innengewindeanker und einem damit verschraubten Bolzen oder Schaft zur Halterung eines Anbauteils in einem in eine Wand aus Beton oder Mauerwerk vorgebohrten Loch. Innengewindeanker solcher Verankerungssysteme sind beispielsweise aus der EP 2 185 829 B1 bekannt.

Bekannt ist ferner ein Verankerungssystem der oben genannten Art (DE 601 13 420 T2), bei dem der Bolzen oder Schaft ein erstes Außengewinde zum Einschrauben in einen Knochen und ein zweites, mit dem ersten Außengewinde verschachteltes Außengewinde aufweist, in das eine Schraubenfeder eingesetzt ist, welche ein Spiel zwischen dem ersten Außengewinde und einem durch das erste Außengewinde in die Knochensubstanz eingearbeiteten Innengewinde aufheben soll.

Aus der US 4,653,132 ist ein Verankerungssystem mit einem Innengewindeanker bekannt. In den Innengewindeanker ist eine Schraube eingeschraubt, welche ein Anbauteil an einer Betonwand hält.

Die DE 10 87 408 B offenbart eine Schraubenfederbefestigung in der Bohrung eines Haltewinkels, die einen U-förmigen Blechstreifen umfasst, dessen Schenkel U-förmige Ausnehmungen haben und über das Ende des von der Schraubenfeder durchsetzten Haltewinkels geschoben werden und dabei gleichzeitig zwischen die Windungen der Schraubenfeder eingreifen.

Die JP H09 177823 A offenbart einen Anker mit einem rohrförmigen Abschnitt an seinem führenden Ende und Erweiterungsmitteln an einem offenen Ende des rohrförmigen Abschnitts. Eine Schraubenfeder ist an einem Ende des Ankers vorgesehen. Ein Fußende der Schraubenfeder ist mit einem weichen Kunstharz beschichtet.

Die DE 87 13 708 U1 offenbart eine Schraubenverbindung mit einer spiralförmigen Gewindegangrille, in welche eine Spiralfeder eingesetzt ist. Diese Spiralfeder stellt einen Körperschluss mit einer anderen Gewindegangrille her.

Durch aktuelle Erdbeben verursachte Versagensfälle und theoretische Simulationen haben gezeigt, dass heutige Verankerungssysteme Belastungsspitzen nicht immer standhalten können.

Erdbeben können sowohl in axialer Richtung der Verankerung als auch quer dazu Verschiebungen zwischen Anbauteilen und Wänden verursachen, die zu unzulässigen Zug- und Biegebeanspruchungen und damit zum Brechen herkömmlicher Verankerungen und in Folge davon zum Einstürzen von Gebäuden führen können.

Es ist daher Aufgabe der Erfindung, ein Verankerungssystem der eingangs beschriebenen Art zu schaffen, das erdbebensicherer ist. Diese Aufgabe ist durch Anspruch 1 gelöst, wonach eine Schraubenfeder den für die Lastaufnahme wesentlichen Bestandteil von Bolzen oder Schaft bildet.

Gemäß einer vorteilhaften Weiterbildung der Erfindung kann es genügen, wenn der Bolzen oder Schaft als Schraubenfeder ausgebildet ist. Erfindungsgemäß hat die Schraubenfeder außerhalb des Innengewindeankers eine ausreichende Länge zum Nachgeben und Durchbiegen der Schraubenfeder in beliebiger Richtung. Ein Verankerungssystem gemäß der Erfindung lässt aufgrund der Nachgiebigkeit der mit dem Innengewindeanker praktisch spielfrei verschraubten Schraubenfeder sowohl in axialer Richtung des Schraubankers als auch in allen Richtungen quer dazu ausreichende Verschiebungen zu, um einem Bruch vorzubeugen.

Dies gilt auch für eine Weiterbildung der Erfindung, bei welcher ein in der Schraubenfeder steckendes Dämpfungsglied zur Schwingungsdämpfung im Falle von stoßartigen Belastungen dient, wie sie bei Erdbeben erzeugt werden.

Vorteilhafte Ausgestaltungen der Erfindung sind in den weiteren Unteransprüchen angegeben.

Die Erfindung ist im folgenden anhand schematischer Zeichnungen mit weiteren Einzelheiten näher erläutert. Es zeigen:
Fig. 1 eine teilweise in Achsrichtung geschnittene erste Ausführung eines Verankerungssystems gemäß der Erfindung;
Fig. 2 und 3 wie in Fig. 1 geschnitten dargestellte abgewandelte Ausführungen;
Fig. 4 und 5 zwei weitere Ausführungen des erfindungsgemäßen Verankerungssystems.

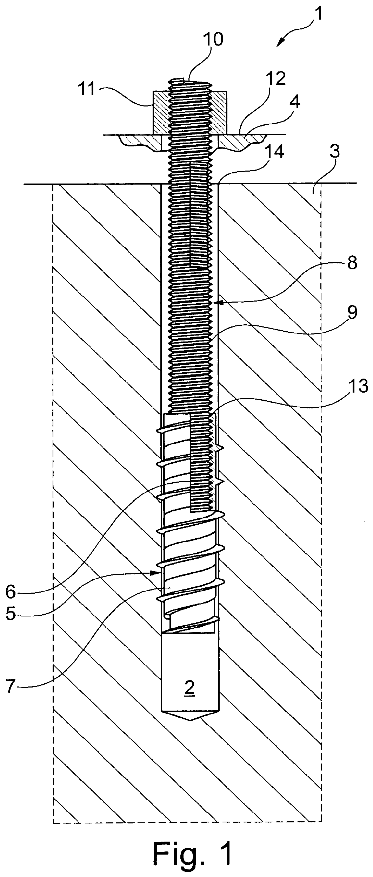

Fig. 1 zeigt ein Verankerungssystem gemäß der Erfindung, das in ein vorgebohrtes Loch 2 in einer Wand 3 aus Beton oder Mauerwerk eingesetzt ist, um ein Anbauteil 4 an dieser Wand 3 sicher zu halten.

Das Verankerungssystem 1 umfasst einen Innengewindeanker 5 mit einem metrischen Innengewinde 6 und einem Außengewinde 7, das gewindefurchend in den Beton um das Loch 2 eingreift.

Ferner hat das Verankerungssystem eine aus Federdraht hergestellte Schraubenfeder 8, die entsprechend dem Innengewinde 6 des Innengewindeankers 5 gewickelt ist und deren Windungen in unbeanspruchtem Zustand aneinander anliegen können, so dass die Schraubenfeder 8 ein Außengewinde 9 bildet.

Auf das montageseitige Ende 10 der Schraubenfeder 8 ist eine Mutter 11 aufgeschraubt, die ein mit dem Innengewinde 6 des Innengewindeankers 5 identisches metrisches Gewinde hat. Die Mutter 11 verspannt das Verankerungssystem 1 mit dem Anbauteil 4.

Bei der gezeigten Ausführung ist der Innengewindeanker 5 so tief in das Loch 2 eingeschraubt, dass seine Oberseite 13 deutlich tiefer als der Rand 14 des Loches 2 liegt.

Es versteht sich aber, dass der Innengewindeanker 5 in beliebige Tiefe in das vorgebohrte Loch eingebracht sein kann, beispielsweise in eine Tiefe, bei der die Oberseite 13 aus dem Loch 2 über dessen Rand 14 herausragt oder damit bündig ist. Wichtig ist lediglich, dass die im Rahmen der üblichen Gewindetoleranzen spielfrei mit dem Innengewinde 6 des Innengewindeankers verschraubten Schraubenfeder 8 zwischen der Oberfläche 12 des Anbauteiles 4 und dem oberen Rand 13 des Innengewindes 6 eine ausreichende Länge zum federnden Durchbiegen und damit Nachgeben in beliebiger Richtung bei Erdbebenstößen hat.

Die Windungen der Schraubenfeder 8 können auch mit Abstand gewickelt sein, wobei dann das Innengewinde 6 des Innengewindeankers 5 entsprechend zu formen ist.

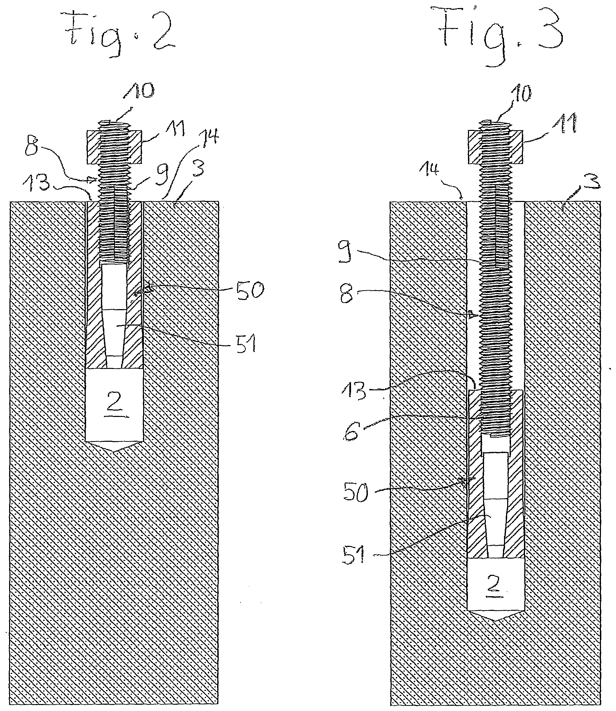

Die Fig. 2 und 3 zeigen Ausführungen der Erfindung, bei welchen der Schraubanker 5 durch einen ebenfalls bekannten Einschlaganker oder Spreizanker 50 ersetzt ist. Die übrigen Teile des Verankerungssystems sind identisch mit denen der Ausführung nach Fig. 1 und deshalb mit identischen Bezugszahlen versehen und hier nicht nochmals beschrieben. So hat auch der Einschlaganker 50 ein Innengewinde 6 zur Aufnahme der Schraubenfeder 8. Ein Unterschied zwischen den Ausführungen nach Fig. 2 und 3 besteht darin, dass die Einschlaganker 50 in unterschiedliche Lochtiefen eingebracht sind, nämlich gemäß Fig. 2 bündig mit dem Rand 14 des Loches 2 und gemäß Fig. 3 in eine Tiefe etwa gleich wie bei der Ausführung nach Fig. 1. Der Einschlaganker 50 wird in das Loch 2 eingeschlagen und anschließend durch Aufspreizen mittels eines Dornes 51 gegen die Lochwandung gepresst.

Der Innengewindeanker kann auch in anderer Weise ausgeführt sein, sofern nur ein Innengewinde zur Aufnahme der Schraubenfeder 6 vorgesehen ist.

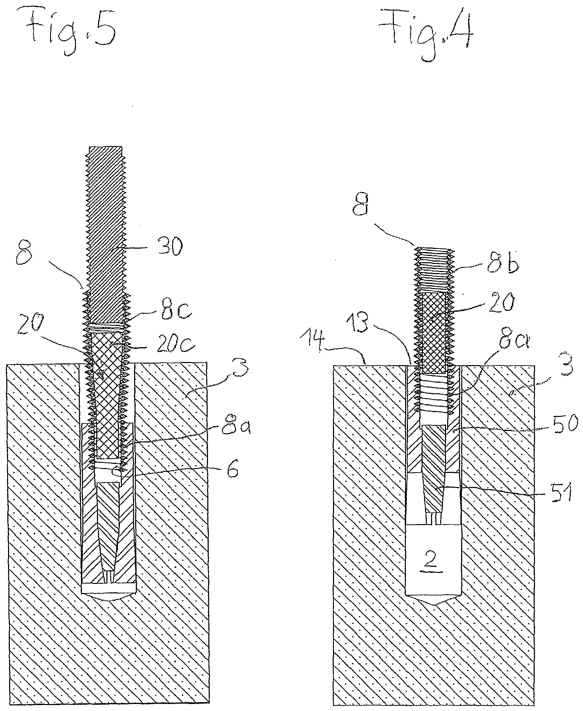

Die Ausführung nach Fig. 4 zeigt ein Verankerungssystem ähnlich demjenigen nach Fig. 2. Für gleiche Teile sind in Fig. 4 gleiche Bezugszeichen verwendet wie in den Fig. 2 und 3. Die Schraubenfeder 8 hat auch hier über ihre Länge gleichbleibenden Außendurchmesser. Sie ist jedoch an ihrem inneren, bohrlochseitigen Ende 8a mit größerer Steigung gewickelt als an ihrem wandäußeren Teil 8b. Grund hierfür ist, dass das von der Schraubenfeder gebildete Innengewinde geeignet zum Einschrauben einer hier nicht gezeigten Gewindestange mit Standard-Außengewinde ausgebildet sein soll. Da auch das Innengewinde des Spreizankers Standardabmessungen genügen soll und größeren Durchmesser als das Innengewinde der Schraubenfeder hat, muss diese im bohrlochseitigen Teil 8a mit entsprechend größerer Standard-Steigung gewickelt sein.

Um Schwingungen der Schraubenfeder 8 zu dämpfen, die durch z. B. von Erdbeben verursachte Erschütterungen erzeugt werden können, ist in die Schraubenfeder 8 ein Dämpfungsglied 20 in Form eines zylindrischen Stabes aus gummielastischem Kunststoff oder einem anderen dämpfenden Material eingesteckt.

Bei der Ausführung nach Fig. 4 ist der Einschlaganker 50 mit seiner Oberseite 13 bündig mit dem Rand 14 des Loches 2 ähnlich wie in der Ausführung nach Fig. 2 in das Loch 2 eingebracht.

Bei der Ausführung nach Fig. 5 ist dagegen der Einschlaganker 50 ähnlich wie bei der Ausführung nach Fig. 3 vertieft in das Loch 2 eingebracht. Bei dieser Ausführung ist eine Schraubenfeder 8 mit ihrem bohrungsseitigen Teil 8a in den Einschlaganker 50 eingeschraubt. Der wandäußere Teil 8c der Schraubenfeder 8 ist so aufgeweitet, dass ein dem Innengewinde des Einschlagankers entsprechendes Innengewinde gleicher Steigung wie im Teil 8a gebildet ist. In dieses Innengewinde der Schraubenfeder 8 ist eine Gewindestange 30 zum Verbinden eines hier nicht gezeigten Anbauteiles mit der Wand 3 eingeschraubt. Das Außengewinde 31 der Gewindestange 30 hat eine zur Steigung des Innengewindes 6 des Einschlagankers 50 entsprechende Steigung. Somit ist die Steigung des Außengewindes der Schraubenfeder 8 hier über deren gesamte Länge identisch.

Wie die Fig. 5 zeigt, steckt ein Dämpfungsglied 20 in der Schraubenfeder 8, das hier eine an die Aufweitung 8c der Schraubenfeder angepasste Verdickung 20c hat.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Verankerungssystem (1) mit einem Innengewindeanker (5, 50) und einem damit verschraubten Bolzen oder Schaft zur Halterung eines Anbauteils (4) in einem in eine Wand (3) aus Beton oder Mauerwerk vorgebohrten Loch (2), dadurch **gekennzei chnet**, dass der Bolzen oder Schaft als Schraubenfeder (8) ausgebildet ist oder eine Schraubenfeder (8) aufweist, wobei die Schraubenfeder (8) passend zu dem Innengewinde (6) des Innengewindeankers (5, 50) gewickelt und in dieses Innengewinde (6) eingeschraubt ist, wobei die Schraubenfeder (8) außerhalb des Innengewindeankers (5, 50) eine ausreichende Länge zum Nachgeben und Durchbiegen der Schraubenfeder (8) in beliebiger Richtung hat.

2. Verankerungssystem (1) nach Anspruch 1, **dadurch gekennzeichnet, dass** in der Schraubenfeder (8) ein Dämpfungsglied (20) steckt.

3. Verankerungssystem (1) nach Anspruch 2, **dadurch gekennzeichnet, dass** eine Gewindestange (30) mit Standard-Außengewinde zum Verbinden des Anbauteiles (4) mit der Wand (3) in das wandäußere Ende der Schraubenfeder (8) eingeschraubt ist.

4. Verankerungssystem (1) nach Anspruch 3, **dadurch gekennzeichnet, dass** die Schraubenfeder (8) einen wandäußeren aufgeweiteten Teil (8c), in welchen die Gewindestange (30) eingeschraubt ist, und ein Innengewinde mit gleicher Steigung wie das Innengewinde (6) des Innengewindeankers (5, 50) aufweist, in welches der bohrlochseitige, nicht aufgeweitete Teil der Schraubenfeder (8) eingeschraubt ist.

5. Verankerungssystem (1) nach Anspruch 3, **dadurch gekennzeichnet, dass** die Schraubenfeder (8) über ihre Länge gleichbleibenden Durchmesser und in ihrem wandäußeren Teil ein Innengewinde mit kleinerer Steigung als in ihrem mit dem Innengewindeanker (5, 50) verschraubten Teil hat.

6. Verankerungssystem (1) nach einem der Ansprüche 2 bis 5, **dadurch gekennzeichnet, dass** das Dämpfungsglied (20) ein zylindrischer Stab aus nachgiebigem Material, wie gummielastischem Kunststoff, ist.

7. Verankerungssystem (1) nach einem der Ansprüche 1 bis 6, **dadurch gekennzeichnet, dass** eine Mutter (11) auf das wandäußere Ende der Schraubenfeder (8) gegen das Anbauteil (4) geschraubt ist.

8. Verankerungssystem (1) nach einem der Ansprüche 1 bis 6, **dadurch gekennzeichnet, dass** am wandäußeren Ende der Schraubenfeder (8) ein Kopf mit einem Antrieb zum Zusammenwirken mit einem Eindrehwerkzeug befestigt ist.

9. Verankerungssystem (1) nach einem der Ansprüche 1 bis 8, **dadurch gekennzeichnet, dass** der Innengewindeanker (5) ein zum gewindefurchenden Eindrehen in Beton geeignetes Außengewinde (9) hat.

10. Verankerungssystem (1) nach einem der Ansprüche 1 bis 8, **dadurch gekennzeichnet, dass** der Innengewindeanker (50) ein in das Loch (2) einzupressender Einschlaganker ist.

11. Verankerungssystem (1) nach einem der Ansprüche 1 bis 10, dadurch **gekennzeic hnet**, dass der Innengewindeanker (5, 50) in eine gewünschte Tiefe in das Loch eingebracht ist.

12. Verankerungssystem (1) nach einem der Ansprüche 1 bis 10, dadurch **gekennzeic hnet**, dass der Innengewindeanker (5, 50) bündig mit dem Rand (14) des Loches (2) eingebracht ist.

## Claims

1. An anchoring system (1) having an internally threaded anchor (5, 50) and a pin or shaft screwed to said internally-threaded anchor for the fixture of an attachment (4) in a hole pre-drilled in a wall made of concrete or brick, **characterized in that** the pin or shaft is formed as a coil spring (8), which is coiled such that it fits the internal thread (6) of the internally threaded anchor (5, 50) and is screwed into said internal thread (6), wherein
the coil spring (8) outside the internally threaded anchor (5, 50) has sufficient length for the yielding and deflecting of the coil spring (8) in any direction.

2. The anchoring system (1) according to claim 1, **characterized in that** a damping element (20) plugs inside the coil spring (8).

3. The anchoring system (1) according to Claim 2, **characterized in that** a threaded rod (30) having a standard external thread for the connecting of the attachment (4) to the wall (3) is screwed into the wall-outward end of the coil spring (8).

4. The anchoring system (1) according to Claim 3, **characterized in that** the coil spring (8) has a wall-outward widened portion (8c) into which the threaded rod (30) is screwed, and an internal thread having the same pitch as the internal thread (6) of the internally threaded anchor (5, 50) into which the drilled hole end, un-widened portion of the coil spring (8) is screwed.

5. The anchoring system (1) according to Claim 3, **characterized in that** the coil spring (8) has a constant diameter along its length and in its wall-outward portion has an internal thread having a smaller pitch than in its portion that is screwed to the internally threaded anchor (5, 50).

6. The anchoring system (1) according to any one of the claims 2 to 5, **characterized in that** the damping element (20) is a cylindrical rod made of resilient material such as rubber plastic.

7. The anchoring system (1) according to any one of the claims 1 to 6, **characterized in that** a nut (11) is screwed against the attachment on the wall-outward end of the coil spring (8).

8. The anchoring system (1) according to any one of the claims 1 to 6, **characterized in that** a head is fixed at the wall-outward end of the coil spring (8), said head having a drive for cooperation with a fastening tool.

9. The anchoring system (1) according to any one of the claims 1 to 8, **characterized in that** the internally threaded anchor (5) has a suitable external thread (9) for the thread-forming insertion into concrete.

10. The anchoring system (1) according to any one of the claims 1 to 8, **characterized in that** the internally threaded anchor (50) is a hammerset anchor to be pushed into the hole (2).

11. The anchoring system (1) according to any one of the claims 1 to 10, **characterized in that** the internally threaded anchor (5, 50) is introduced into the hole to a desired depth.

12. The anchoring system (1) according to any one of the claims 1 to 10, **characterized in that** the internally threaded anchor (5, 50) is inserted flush with the edge (14) of the hole (2).

## Revendications

1. Système d'ancrage (1) avec un ancrage à filetage interne (5, 50) et un boulon ou tige pour le maintien d'une pièce rapportée (4) dans un trou (2) pré-percé dans un mur (3) en béton ou en maçonnerie, **caractérisé en ce que** le boulon ou la tige est conçue comme un ressort hélicoïdal (8) ou comprend un ressort hélicoïdal (8), le ressort hélicoïdal (8) étant enroulé de façon correspondante au filetage interne (6) de l'ancrage à filetage interne (5, 50) et est vissé dans ce filetage interne (6), le ressort hélicoïdal (8) présentant hors de l'ancrage à filetage interne (5, 50), une longueur suffisante permettant au ressort hélicoïdal (8) de céder et de fléchir dans une direction quelconque.

2. Système d'ancrage (1) selon la revendication 1, **caractérisé en ce que**, dans le ressort hélicoïdal (8) est emboîté un organe d'amortissement (20).

3. Système d'ancrage (1) selon la revendication 2, **caractérisé en ce qu'**une tige filetée (30) avec un filetage externe standard pour la liaison de la pièce rapportée (4) avec le mur (3) est vissée dans l'extrémité extérieure au mur du ressort hélicoïdal (8).

4. Système d'ancrage (1) selon la revendication 3, **caractérisé en ce que** le ressort hélicoïdal (8) comprend une partie élargie (8c) à l'extérieur du mur, dans laquelle la tige filetée (30) est vissée, et un filetage interne avec le même pas que le filetage interne (6) de l'ancrage à filetage interne (5, 50), dans lequel la partie côté trou de perçage, non élargie, du ressort hélicoïdal (8) est vissée.

5. Système d'ancrage (1) selon la revendication 3, **caractérisé en ce que** le ressort hélicoïdal (8) présente un diamètre constant sous toute sa longueur et comprend, dans sa partie extérieure au mur, un filetage interne avec un pas inférieur au pas dans sa partie vissée avec l'ancrage à filetage interne (5, 50).

6. Système d'ancrage (1) selon l'une des revendications 2 à 5, **caractérisé en ce que** l'organe d'amortissement (20) est une barre cylindrique en matériau flexible comme une matière plastique de type caoutchouc élastique.

7. Système d'ancrage (1) selon l'une des revendications 1 à 6, **caractérisé en ce qu'**un écrou (11) est vissé sur l'extrémité extérieure au mur du ressort hélicoïdal (8) contre la pièce rapportée (4).

8. Système d'ancrage (1) selon l'une des revendications 1 à 6, **caractérisé en ce que**, au niveau de l'extrémité extérieure au mur du ressort hélicoïdal (8), est fixée une tête avec un dispositif d'entraînement qui interagit avec un outil de vissage.

9. Système d'ancrage (1) selon l'une des revendications 1 à 8, **caractérisé en ce que** l'ancrage à filetage interne (5) comprend un filetage externe (9) pour un vissage auto-perçant dans le béton.

10. Système d'ancrage (1) selon l'une des revendications 1 à 8, **caractérisé en ce que** l'ancrage à filetage interne (50) est un ancrage à frapper qui peut être enfoncé dans le trou (2).

11. Système d'ancrage (1) selon l'une des revendications 1 à 10, **caractérisé en ce que** l'ancrage à filetage interne (5, 50) est introduite dans le trou à une profondeur souhaitée.

12. Système d'ancrage (1) selon l'une des revendications 1 à 10, **caractérisé en ce que** l'ancrage à filetage interne (5, 50) est introduite en affleurement avec le bord (14) du trou (2).
